# EUROPEAN PATENT SPECIFICATION

(11) **EP 1 826 881 B1**
(45) Date of publication and mention of the grant of the patent: **30.04.2014**
(21) Application number: 06425114.3
(22) Date of filing: 24.02.2006
(51) Int. Cl.: H02B 1/48, F23D 14/46

(54) **Support panel for electrical components in a burner**
Trägerplatte für elektrische Bauelemente in einem Brenner
Panneau-support de composants électriques dans un brûleur

(43) Date of publication of application: 29.08.2007
(73) Proprietor: Riello S.p.A., 37045 Legnago (VR) (IT)
(72) Inventor: Pastorello, Giorgio, 35044 Montagnana (IT); Spadini, Ilario, 37045 Legnago (IT); Toniato, Giuseppe, 37045 Legnago (IT)
(74) Representative: Cerbaro, Elena

(56) References cited:
- WO-A-99/54973
- US-A- 4 039 900
- US-A- 4 222 089
- US-A- 4 683 518
- US-A- 5 148 348
- US-B1- 6 429 606
- US-B1- 6 796 792

## Description

The present invention relates to a support panel for electrical components in a burner.

A support panel according to the preamble of claim 1 is known from document US_6429606_B1.

Generally, burners comprise an aluminium plate on which is mounted the scroll structure for air intake and advancement. Such aluminium plate is arranged next to the boiler and cannot act as a support for the electrical components for obvious safety reasons.

The electrical components needed for the operation of the burner are mounted on a support plate which is usually fastened to the scroll structure and therefore appropriately distanced from the boiler.

Such solution entails disadvantages related to the overall dimensions of the burner, the need to make an attachment for the support plate onto the scroll structure and the consequent assembly operation.

Therefore, it is the object of the present invention to make a support panel for electrical components whose features may simply and cost-effectively solve the problems of the known art.

Therefore, the object of the present invention is a support panel for electrical components in a burner presenting the features claimed in claim 1.

The following example is provided by way of nonlimiting illustration for better understanding of the invention with the help of the figures in the accompanying drawings, in which:
- figure 1 is a perspective view of the support panel according to the present invention; and
- figure 2 is a perspective view of the panel in figure 1 to which the electrical components are fastened.

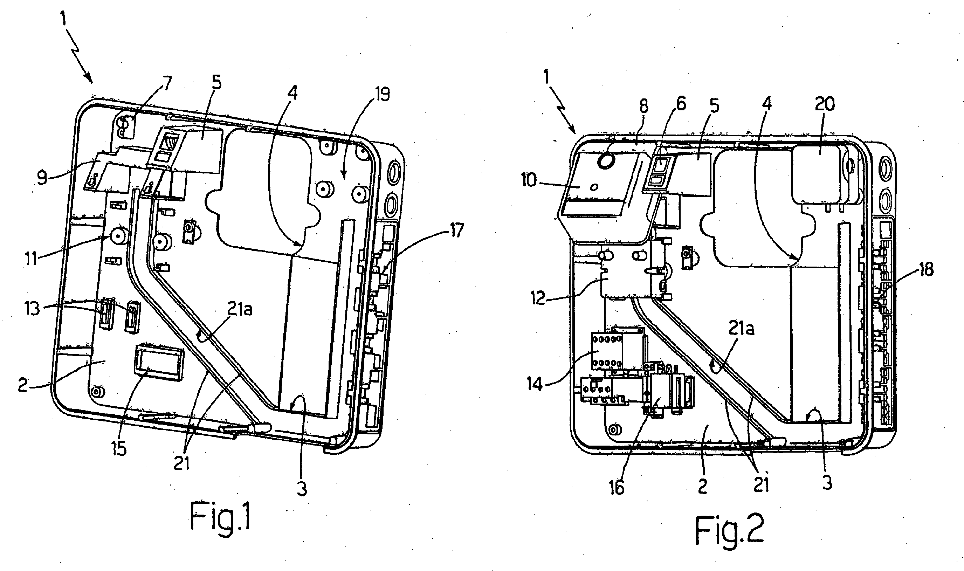

In figures 1 and 2, it is indicated as a whole by 1 the supporting panel according to the present invention.

The supporting panel 1 is made by moulding of polymeric material and presents mechanical features similar to those of an aluminium plate.

The support panel 1 comprises a base surface 2 in which are made a first opening 3, which faces an inlet of an air intake conduit, and a second opening 4, which faces an outlet of a scroll structure connected to the intake conduit responsible for advancing the intake air. The intake conduit and the scroll structure are known and not shown for the sake of simplicity.

Panel 1 comprises a plurality of housing and fastening elements which protrude from the base surface 2, with which they are integral.

In particular, as apparent by comparing figures 1 and 2, panel 1 comprises a housing and fastening element 5 for a switch 6, a housing and fastening element 7 for a capacitor 8, a housing and fastening element 9 for a control box 10, a housing and fastening elements assembly 11 for an ignition transformer 12, two housing and fastening elements 13 for a starter 14, a housing and fastening element 15 for a relay 16, a housing and fastening assembly 17 for a component 18 which may comprise a bulb holder or a socket or a tap, and a housing and fastening assembly 19 for a barostat 20.

Furthermore, panel 1 comprises two wall elements 21 defining a duct 21a for housing electrical wires.

The electrical components, the scroll structure and the intake conduit, once fitted on the panel 1, are covered by a protective shell which is peripherally fastened to panel 1. On a side facing the one housing the electrical components, panel 1 is coupled to an aluminium plate which in turn faces in use the boiler environment.

It may be apparent to a person skilled in the art that once the mould is made, manufacturing by moulding (possibly in a single moulding operation) of a supporting panel of this type is a particularly simple operation.

The panel according to the present invention considerably simplifies the assembly of the burner and rationalises the spaces with obvious advantages in terms of safety and in terms of efficiency.

Polymeric material is generally an excellent thermal insulator and therefore there exist no problems related to overheating and failures of the electrical components at the temperatures to which it is subjected due to proximity with the burner environment.

## Claims

1. A burner comprising support panel (1) for electrical components; the panel (1) comprising a plurality of housing and fastening elements (5, 7, 9, 11, 13, 15, 17, 19) integrally made with said panel (1) itself, and each of which is deputed to housing and fastening a particular electrical component (6, 8, 10, 12, 14, 16, 18, 20); said support panel (1) being made of polymeric material; the panel being **characterised in that** it further comprises a first opening (3) facing an inlet of an air intake conduit, a second opening (4) facing an outlet of a scroll structure connected to the intake conduit.

2. A burner according to claim 1, **characterised in that** said panel (1) comprises two wall elements (21) defining a duct (21a) for housing electrical wires.

3. A burner according to claim 1 or 2, **characterised in that** said panel (1) is made, along with said housing and fastening elements (5, 7, 9, 11, 13, 15, 17, 19), by means of a polymeric material moulding operation.

4. A burner according to claim 3, **characterised in that** said panel (1) is made, along with said housing and fastening elements (5, 7, 9, 11, 13, 15, 17, 19), by means of a single polymeric material moulding operation.

## Patentansprüche

1. Brenner mit einer Trägerplatte (1) für elektrische Bauelemente; wobei die Platte (1) eine Mehrzahl von Unterbringungs- und Befestigungselementen (5, 7, 9, 11, 13, 15, 17, 19) umfasst, die einstückig mit der Platte (1) selbst hergestellt sind, und jedes derselben dazu bestimmt ist, ein bestimmtes elektrisches Bauelement (6, 8, 10, 12, 14, 16, 18, 20) unterzubringen und zu befestigen; wobei die Trägerplatte (1) aus einem polymeren Material hergestellt wird; wobei die Platte **dadurch gekennzeichnet** wird, dass sie ferner eine erste Öffnung (3) umfasst, die einem Einlass eines Luftansaugkanals gegenüberliegt; und eine zweite Öffnung (4) umfasst, die einem Auslass einer Scroll-Struktur gegenüberliegt, die mit der Luftansaugleitung verbunden ist.

2. Brenner gemäß Anspruch 1, **dadurch gekennzeichnet, dass** die Platte (1) zwei Wandelemente (21) umfasst, die einen Kanal (21a) zum Unterbringen von elektrischen Drähten definieren.

3. Brenner gemäß Anspruch 1 oder 2, **dadurch gekennzeichnet, dass** die Platte (1), zusammen mit den Unterbringungs- und Befestigungselementen (5, 7, 9, 11, 13, 15, 17, 19), mittels eines Formgebungsvorgang eines polymeren Materials hergestellt ist.

4. Brenner gemäß Anspruch 3, **dadurch gekennzeichnet, dass** die Platte (1), zusammen mit den Unterbringungs- und Befestigungselementen (5, 7, 9, 11, 13, 15, 17, 19), mittels eines einzigen Formgebungsvorgangs eines polymeren Materials hergestellt ist.

## Revendications

1. Brûleur comprenant un panneau de support (1) pour des composants électriques ; le panneau (1) comprenant une pluralité d'éléments de logement et de fixation (5, 7, 9, 11, 13, 15, 17, 19) réalisés d'une seule pièce avec ledit panneau (1) lui-même et dont chacun est destiné à loger et fixer un composant électrique particulier (6, 8, 10, 12, 14, 16, 18, 20) ; ledit panneau de support (1) étant constitué d'un matériau polymère ; le panneau étant **caractérisé en ce qu'**il comprend en outre une première ouverture (3) faisant face à une entrée d'un conduit d'admission d'air, une deuxième ouverture (4) faisant face à une sortie d'une structure de volute connectée au conduit d'admission.

2. Brûleur selon la revendication 1, **caractérisé en ce que** ledit panneau (1) comprend deux éléments de paroi (21) définissant un conduit (21a) pour loger des fils électriques.

3. Brûleur selon la revendication 1 ou 2, **caractérisé en ce que** ledit panneau (1) est réalisé, conjointement auxdits éléments de logement et de fixation (5, 7, 9, 11, 13, 15, 17, 19), au moyen d'une opération de moulage de matériau polymère.

4. Brûleur selon la revendication 3, **caractérisé en ce que** ledit panneau (1) est réalisé, conjointement auxdits éléments de logement et de fixation (5, 7, 9, 11, 13, 15, 17, 19), au moyen d'une unique opération de moulage de matériau polymère.
